# EUROPÄISCHE PATENTANMELDUNG

(11) **EP 4 000 918 A1**
(43) Veröffentlichungstag der Anmeldung: **25.05.2022**
(21) Anmeldenummer: 21207912.3
(22) Anmeldetag: 12.11.2021
(51) Int. Cl.: B32B 7/022, B32B 7/12, B32B 17/10, B32B 27/08, B32B 27/22, B32B 27/28, B32B 27/30, B32B 27/36, B32B 27/40, B32B 37/00

(54) **VERBUNDFOLIE FÜR PLATTEN**

(30) Priorität: 12.11.2020 EP 20207291
(71) Anmelder: Folex Coating GmbH, 50767 Köln (DE)
(72) Erfinder: Dietrich, Thomas, 50259 Pulheim (DE); Fechner, Björn, 50126 Bergheim (DE); Komorek, Guido, 51381 Leverkusen (DE)
(74) Vertreter: dompatent von Kreisler Selting Werner - Partnerschaft von Patent- und Rechtsanwälten mbB

(57) **Zusammenfassung**

Platte mit einer Verbundfolie umfassend
- einen Träger A
- eine Schicht eines drucksensitiven Klebstoffs
- eine Schicht B eines weicheren Kunststoffs mit einer Dicke von mindestens 25 µm
- eine Schicht eines drucksensitiven Klebstoffs
- eine Schicht C eines härteren Kunststoffs mit einer Dicke von mindestens 25 µm
- eine Schicht eines drucksensitiven Klebstoffs
- eine Schicht F eines härteren Kunststoffs mit einer Dicke von mindestens 50 µm
wobei die Verbundfolie ohne den Träger transparent ist und eine Gesamtdicke von mindestens 350 µm aufweist, wobei Schichten aus weicherem Kunststoff unabhängig voneinander ausgewählt sind aus thermoplastischem Polyurethan oder Weichmacher-modifiziertem PVC und wobei Schichten aus härterem Kunststoff unabhängig voneinander ausgewählt sind aus Polyethylenterephthalat, Polyethylennapthalat, Acrylnitril-Butadien-Styrol, Poly(methylmethacrylat) oder Polybutylenterephthalat.

## Beschreibung

Die vorliegende Erfindung betrifft Verbundfolien und Platten, die mit einer Verbundfolie versehen sind, um z.B. die Einbruchssicherheit eines Trägers, z.B. einer Glasscheibe nachträglich zu erhöhen.

Sicherheitsverglasung wird in verschiedenen Bereichen verwendet, um insbesondere die Einbruchssicherheit zu verbessern.

Die sogenannte Sicherheitssonderverglasung wird in der DIN EN 356 geregelt. Ein üblicher Test dieser Norm ist die Durchwurfhemmung. Dabei muss in der Widerstandsklasse P1A eine 4 kg schwere Kugel aus einer Höhe von 1,5 m 3 Mal auf das Sicherheitsglas fallen können, ohne dieses zu durchschlagen. Für die Widerstandsklasse P4A ist die Höhe bereits 9 m; in der Stufe P5A muss die Scheibe 9 Wiederholungen statt 3 Wiederholungen aushalten. Entscheidend ist bei dem Test nicht, ob die Scheibe beschädigt wird, sondern ob die Scheibe durchschlagen wird.

US 10,093,079 offenbart Autoscheibenpanzerglas umfassend Schichten von Polyurethan und C-PET, wobei die Polyurethanschichten 180 bis 2000 µm und die Schichten von C-PET 180 bis 2000 µm stark sind. Diese werden industriell mit einer Standard Autoscheibe verbunden, unter Einsatz eines Autoklaven, bevorzugt ohne Klebstoffeinsatz. Eine Nachrüstung von Scheiben ist auf diesem Wege nicht möglich.

DE-OS-2 039 452 offenbart einen Glaskunststoffkörper, insbesondere Verbundfenster in denen gehärtetes Polyurethan als Zwischenschicht verwendet wird. Kern ist die Verwendung eines dünnen Films aus ungehärtetem Polyurethan und zwischen einer inneren Oberfläche der innersten Scheibe und der gehärteten Polyurethanschicht.

Grundsätzlich besteht ein Bedarf danach, vorhandene Fenster entsprechend nachzurüsten, d.h. eine vorhandene Scheibe durch Veränderungen dazu zu bringen, dass sie die Schutzklassen einhält. Obwohl die oben genannte DIN EN 356 hierfür nicht gedacht ist, wird sie häufig zur Analyse herangezogen.

Aufgabe der vorliegenden Erfindung war es, entsprechende Produkte bereitzustellen.

Gelöst wird die Aufgabe durch eine Platte mit einer Verbundfolie umfassend
- einen Träger A
- eine Schicht eines drucksensitiven Klebstoffs
- eine Schicht B eines weicheren Kunststoffs mit einer Dicke von mindestens 25 µm
- eine Schicht eines drucksensitiven Klebstoffs
- eine Schicht C eines härteren Kunststoffs mit einer Dicke von mindestens 25 µm
- eine Schicht eines drucksensitiven Klebstoffs
- eine Schicht F eines härteren Kunststoffs mit einer Dicke von mindestens 50 µm
wobei die Verbundfolie ohne den Träger transparent ist und eine Gesamtdicke von mindestens 350 µm aufweist.

Dies ist also z.B. eine nachgerüstete Glasscheibe, auf der eine Verbundfolie angebracht wurde.

Die Verbundfolie zeichnet sich durch die Anwesenheit von Schichten weicherer Kunststoffe und Schichten härterer Kunststoffe aus. Die Härte einer Kunststoffschicht wird erfindungsgemäß gemessen durch die Shore Härte Prüfung nach DIN ISO 76919-1.

Diese Angaben weicherer Kunststoff und härterer Kunststoff sind relativ zueinander, d. h. der weichere Kunststoff in der Verbundfolie zeigt eine geringere Härte als der härtere Kunststoff. Typische Shore-Härten für die weicheren Kunststoffe sind im Bereich von 60 bis 99 Shore A, für die härteren Kunststoffe im Bereich von ≥100 Shore A. Typischerweise werden für die härteren Kunststoffe Angaben in Shore D verwendet.

Die Gesamtdicke der Verbundfolie beträgt bevorzugt mindestens 400 µm, bevorzugt mindestens 500 µm. Typischerweise liegt die Gesamtdicke bei nicht mehr als 1500 µm. Bei der Gesamtdickenmessung werden aller Klebeschichten mit einbezogen.

Besonders geeignete Materialien für die Schichten aus weicherem Kunststoff sind insbesondere thermoplastisches Polyurethan und Weichmachermodifiziertes PVC. Thermoplastisches Polyurethan ist bevorzugt.

Besonders geeignete Materialien für die Schichten aus härterem Kunststoff sind insbesondere Polyethylenterephthalat, Polyethylennapthalat, Polycarbonat, Acrylnitril-Butadien-Styrol, Poly(methylmethacrylat) und Polybutylenterephthalat. Polyethylenterephthalat ist bevorzugt.

Soweit mehrere Schichten aus weicherem Kunststoff oder härterem Kunststoff eingesetzt werden, können diese aus unterschiedlichen Kunststoffen bestehen oder unterschiedliche Härten aufweisen. Alle Schichten aus weicherem Kunststoff sind weniger hart als die weichste Schicht aus härterem Kunststoff.

Ein bevorzugtes Merkmal ist weiterhin, dass die Verbundfolie eine Transmission >80% oder einen Haze aufweist, der kleiner ist als 6%, beides gemessen nach ASTM D1003. In bevorzugten Fällen wird dies auch von der Platte mit Verbundfolie erfüllt, d.h. auch der Träger ist transparent.

Das erfindungsgemäße Produkt ist eine Platte mit einer Verbundfolie. "Platte mit einer Verbundfolie" hat ein formstabiles Element und eine Verbundfolie. Dieses formstabile Element wird als Träger bezeichnet. Dieser Träger A kann z.B. aus Glas bestehen, er kann aber auch beispielsweise aus Acrylglas oder Polycarbonat bestehen. Bevorzugt ist der Träger ein Glas.

Auf diesem Träger A befindet sich eine Schicht eines drucksensitiven Klebstoffs und dann eine Schicht B des weicheren Kunststoffs mit einer Dicke von mindestens 25 µm. Die Schicht eines weicheren Kunststoffs ist mit Hilfe des drucksensitiven Klebstoffs auf den Träger A geklebt. Bevorzugt weist diese Schicht B eine Dicke von 75 bis 400 µm, noch mehr bevorzugt 100 bis 200 µm auf. Bevorzugte Schichten eines weicheren Kunststoffs zeichnen sich durch eine hohe Transparenz aus.

Geeignete kommerziell erhältliche Produkte für thermoplastisches Polyurethan sind beispielsweise unter dem Namen "49510-60DV" von SWM INTL (Greenfield, MA, USA) oder unter dem Namen XGT01585-ZH-PET von Shanghai Xin Gen Eco-Technologies Co., Ltd. (Shanghai, China) erhältlich. Weichmachermodifiziertes PVC ist beispielsweise unter dem Namen Prime Crystal Clear PCC H71 von RENOLIT SE (Worms, Deutschland) erhältlich.

Auf der Schicht B, z.B. dem thermoplastischen Polyurethan befindet sich eine Schicht C, die wiederum mit Hilfe eines drucksensitiven Klebstoffs mit der Schicht B verbunden ist. Die Schicht C besteht aus dem härteren Kunststoff und weist eine Dicke von mindestens 25 µm auf. Bevorzugt weist die Schicht eine Dicke von mindestens 70 oder mindestens 125 µm auf. Bevorzugt liegt die Schichtdicke unterhalb von 350 µm, besonders bevorzugte Dickenbereiche liegen für diese Schicht im Bereich von 175 µm bis 300 µm.

Bevorzugte härtere Schichten zeichnen sich durch eine hohe Transparenz aus, geeignete kommerziell erhältliche Produkte für PET sind beispielsweise unter dem Namen Lumirror von Toray Industries (Tokio, Japan) oder Skyrol von SKC Europe GmbH (Frankfurt am Main, Deutschland) erhältlich. Produkte für Polycarbonat sind beispielsweise unter dem Namen Makrofol DE 1-1 von Covestro AG (Leverkusen, Deutschland) erhältlich. Produkte für PMMA sind beispielsweise unter dem Namen PLEXIGLAS Film 0F063 von Röhm GmbH (Darmstadt, Deutschland) erhältlich.

Bevorzugt sind teilkristalline PET (C-PET) oder biaxial-orientierte PET.

Darauf folgt eine Schicht F, die aus dem härteren Kunststoff besteht und eine Dicke von mindestens 50 µm aufweist. Bevorzugt liegt die Schichtdicke unterhalb von 200 µm, besonders bevorzugte Dickenbereiche liegen für diese Schicht im Bereich von 75 µm bis 135 µm. Sie ist ebenfalls mit einem drucksensitiven Klebstoff mit der Schicht C verbunden. Als Materialien eigenen sich besonders die für Schicht C beschriebenen Materialien. Typischerweise ist Schicht F die äußere Schicht, die in Kontakt mit der Umgebungsluft steht.

Die drucksensitiven Klebstoffe zwischen den Schichten A-B, B-C und C-F können identisch sein. Es können aber auch verschiedene Klebstoffe eingesetzt werden. Als drucksensitive Klebstoffe eignen sich Acrylat- oder Methacrylat-Klebstoffe besonders. Geeignete kommerziell erhältliche Produkte sind beispielsweise unter dem Namen Swiftcol von H.B. Fuller (Saint Paul, MN, USA) oder Duro-Tak 1610 von Henkel AG & Co. KGaA (Düsseldorf, Deutschland) erhältlich. Eine typische Schichtdicke für den Kleber ist 10 bis 30 µm.

In einigen Ausführungsformen ist es bevorzugt, dass eine Vorbehandlung der Folienoberfläche erfolgt, die die Haftung des drucksensitiven Klebstoffs an der Schicht verbessert. Dies kann eine klassische chemische Primerschicht sein oder eine physikalische Vorbehandlung wie Corona und Plasma. Eine klassische chemische Primerschicht ist z.B. Pearlstick 5701 F51 von Lubrizol Advanced Materials Inc. Europe B.V.B.A (Oevel, Belgien). Eine typische Schichtdicke ist meist 1 bis 2 µm; der Auftrag erfolgt flüssig durch Rakeln oder Sprühen.

In einigen Ausführungsformen ist es bevorzugt, dass die oberste Folie der Verbundfolie auf der kleberabgewandten Seite einen Hardcoat aufweist. Dies ist also die Folie, die nach der Montage vom Träger A am weitesten entfernt ist. Ein Hardcoat ist ein kratz- und scheuerbeständiger Lack, der den Folienverbund beim Reinigen vor Kratzern schützt. Dieser ist auf Folien teilweise herstellerseitig aufgetragen. Er kann aber auch im Rahmen der Herstellung der Verbundfolie aufgetragen werden. Ein geeigneter Lack ist beispielsweise unter der Bezeichnung UV-GL 1366 von Bostik GmbH (Borgholzhausen, Deutschland) oder VP/151/200103 von Cetelon Lackfabrik GmbH (Ditzingen, Deutschland) erhältlich.

In einer Ausführungsform weist die Platte mit einer Verbundfolie zusätzlich
- eine Schicht eines drucksensitiven Klebstoffs
- eine Schicht D eines weicheren oder eines härteren Kunststoffs mit einer Dicke von mindestens 75 µm
- eine Schicht eines drucksensitiven Klebstoffs
- eine Schicht E eines härteren Kunststoffs mit einer Dicke von mindestens 70 µm.

Für die Schichten D und E gilt das für Schicht B und C beschriebene analog. Die Klebstoffschichten können gleich oder verschieden von den Klebstoffschichten zwischen A-B, B-C und C-F sein.

Schicht D weist eine Dicke von mindestes 75 µm auf. Bevorzugt weist die Schicht eine Dicke von mindestens 96 µm auf. Bevorzugt liegt die Schichtdicke unterhalb von 250 µm, besonders bevorzugte Dickenbereiche liegen für diese Schicht im Bereich von 100 µm bis 150 µm.

Schicht E weist bevorzugt eine Dicke von mindestens 70 µm auf. Bevorzugt liegt die Schichtdicke unterhalb von 350 µm, besonders bevorzugte Dickenbereiche liegen für diese Schicht im Bereich von 200 µm bis 300 µm.

Überraschenderweise können die Produkte, bei denen eine Verbundfolie mit den Schichten B, C und F auf einen Träger A geklebt wird, der ein 4 mm Floatglas ist, die Widerstandsklasse von P3A erreichen, wenn in Abweichung von DIN EN 356 die Montage der Scheibe im Rahmen mit einem Anpressdruck von 1600 ± 250 kN/m² erfolgt.

Die erfindungsgemäßen Produkte sind zur nachträglichen Ausrüstung einer Platte, beispielsweise eines Fensters geeignet. Daher ist Gegenstand der Erfindung auch eine Verbundfolie umfassend:
- eine Abdeckschicht X
- eine Schicht eines drucksensitiven Klebstoffs
- eine Schicht B eines weicheren Kunststoffs mit einer Dicke von mindestens 25 µm
- eine Schicht eines drucksensitiven Klebstoffs
- eine Schicht C eines härteren Kunststoffs mit einer Dicke von mindestens 25 µm,
wobei die Verbundfolie ohne die Abdeckschicht X transparent ist und eine Gesamtdicke von mindestens 200 µm aufweist.

Dies ist also ein Folienprodukt, mit dem eine Glasscheibe nachgerüstet werden kann.

Die Abdeckschicht dient zum Schutz des Klebers vor der Montage und wird zur Montage entfernt. Solche Abdeckschichten werden auch als 'Release Liner' bezeichnet.

In einigen Ausführungsformen kann die Verbundfolie zusätzlich eine weitere Schicht F aufweisen.

In vielen Fällen wird es nicht sinnvoll sein, weitere Schichten in diese Verbundfolie einzubringen, weil die Verarbeitung der Verbundfolie dadurch zu schwierig wird.

In solchen Fällen kann mit einzelnen Folien oder auch mit mehreren Verbundfolien gearbeitet werden. Gegenstand der Erfindung ist daher weiterhin ein Verfahren zur Herstellung einer Platte mit einer Verbundfolie umfassend den Schritt
- Montage einer oder mehrerer Folien oder Verbundfolien auf der Platte.

In einigen Ausführungsformen kann eine erste Verbundfolie umfassend die Schichten B und C montiert werden sowie anschließend eine Verbundfolie umfassend die Schichten D, E und F. Es kann auch zunächst eine Verbundfolie mit den Schichten B, C, D montiert werden und anschließend eine zweite Verbundfolie mit den Schichten E und F. Grundsätzlich könnten auch alle Folien nacheinander auf der Scheibe montiert werden.

In anderen Ausführungsformen wird nur eine Verbundfolie montiert, die beispielsweise die Schichten B und C oder die Schichten B, C und F umfasst.

Überraschenderweise können die Produkte, bei denen Verbundfolien mit den Schichten B, C, D, E und F auf einen Träger A geklebt wird, der ein 4 mm Floatglas ist, die Widerstandsklasse von mindestens P4A erreichen, wenn in Abweichung von DIN EN 356 die Montage der Scheibe im Rahmen mit einem Anpressdruck von 1600 ± 250 kN/m² erfolgt.

In bevorzugten Ausführungsformen ist die Platte ein Bauteil eines Fensters, ist also von einem Fensterrahmen umfasst und wird nachträglich mit einer entsprechenden Folie versehen. In den Fällen, in denen ein Fenster an einer Außenseite eines Gebäudes ist, gibt es eine Innenseite, die dem Raum zugewandt ist, und eine Außenseite, die der Umwelt zugewandt ist.

In einer bevorzugten Ausführungsform wird die Verbundfolie auf der Seite der Platte montiert, die der Sonneneinstrahlung abgewandt ist. Dies hat den Vorteil, dass die UV-Einstrahlung durch die Platte gefiltert ist, bevor sie auf die Folie trifft.

In anderen Ausführungsformen kann es sinnvoll sein, die Verbundfolie auf der Seite zu montiert, die der Sonneneinstrahlung zugewandt ist. In beiden Fällen ist es besonders sinnvoll, in eine oder mehrere Klebstoffschichten einen UV-Schutz einzubringen. Bei einer Verlegung zur Sonnenseite hin ist es darüber hinaus sinnvoll, einen UV-Absorber z.B. in die Hardcoat-Schicht einzubringen, damit das Produkt bereits in der obersten Schicht vor der Sonneneinstrahlung geschützt wird.

In einigen Ausführungsformen kann es sinnvoll sein, die Folie beidseitig anzubringen, beispielsweise auf der einen Seite eine erste dreischichtige Folie und auf der anderen Seite eine zweite dreischichtige Folie.

Obwohl thermoplastische Polyurethane und Weichmacher-modifizierter PVC relativ weich sind, sind sie erstaunlicherweise in der Lage, einen wichtigen Beitrag zur Durchwurfhemmung einer Scheibe zu liefern.

Gegenstand der Erfindung ist daher auch die Verwendung von Polyurethanfolie oder einer Weichmacher-modifizierten PVC-Folie als Basisfolie einer Verbundfolie zur Verstärkung einer Platte, wobei die Basisfolie in Kontakt mit der Platte steht. In Kontakt mit der Platte bedeutet dabei insbesondere, dass sie mit einem Klebstoff befestigt sein kann.

Die erfindungsgemäßen Produkte weisen innerhalb der montierten Verbundfolie bevorzugt genau 3 (B-C-F) oder genau 5 (B-C-D-E-F) Folienschichten auf.

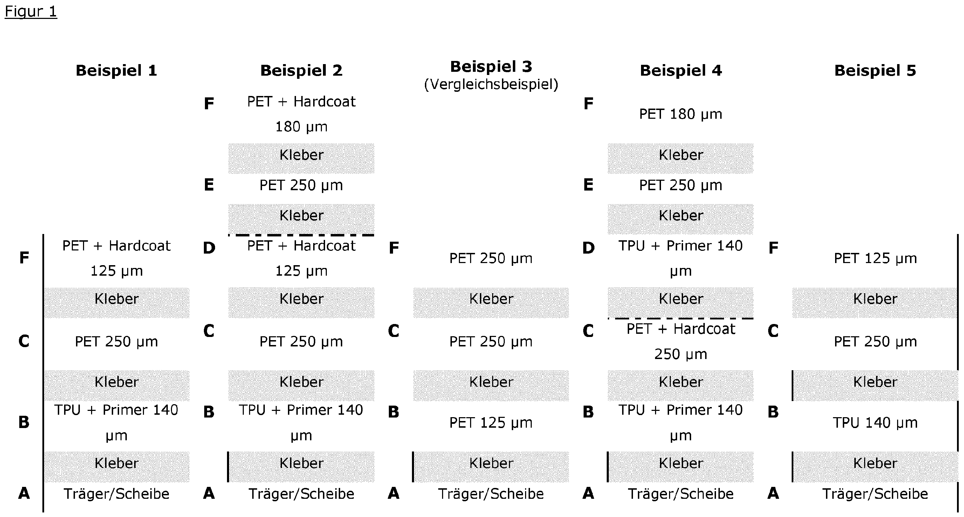

Figur 1 zeigt den Aufbau der Beispiele 1 bis 5.

Die Erfindung wird durch die folgenden weiteren Beispiele näher erläutert.

### I. Messverfahren

### Kuaelfalltest

Für den Kugelfalltest analog DIN EN 356 wird eine 4 kg schwere Kugel aus einer definierten Höhe fallen gelassen. Dazu werden die entsprechenden Verbundfolien auf eine 4 mm Floatglasscheibe, beispielsweise von GLS Spezial-& Farbglashandel GmbH montiert. In Abweichung von DIN EN 356 erfolgt die Montage der Scheibe im Rahmen mit einem Anpressdruck von 1600 ± 250 kN/m².

Die Verbundfolie befindet sich auf der dem Aufprall abgewandten Seite.

Für die Widerstandsklasse P3A müssen aus einer Fallhöhe von 6.000 ± 50 mm drei Falltests nacheinander bestanden werden, ohne dass die Kugel durchschlägt. Für den Test P4A aus 9.000 ± 50 mm bei drei Wiederholungen und für P5A 9.000 ± 50 mm bei neun Wiederholungen.

Es ist auch möglich, den Kugelfalltest in einer Weise durchzuführen, bei der sich die Verbundfolie auf der dem Aufprall zugewandten Seite befindet. Dabei werden höhere Widerstandsklassen erreicht bzw. gleiche Widerstandsklassen mit dünneren Folien. Alle folgenden Messergebnisse beziehen sich auf Aufbauten, bei denen sich die Verbundfolie auf der dem Aufprall abgewandten Seite befindet.

### Haze- und Transmissionsmessung

Die Messung erfolgte gemäß ASTM D1003. Hierzu wird für den Haze eine Probe der Folie ohne Release-Liner und ohne Platte bzw. Träger in das "Hazegard System XL-211" von der BYK-Chemie GmbH (Wesel, Deutschland) eingelegt. Anschließend erfolgt entsprechend der Bedienungsanleitung des Gerätes eine Kalibrierung mit anschließender Messung. Dabei wird ein gebündelter Lichtstrahl durch die Probe geschickt. Bei der Haze-Messung wird diejenige Menge an Licht bestimmt, die durch die eingelegte Probe zerstreut wird, also nicht geradlinig aus dieser heraustritt.

Die Transmissions-Messung erfolgt mit demselben Gerät auf eine ähnliche Art. Allerdings wird das Gerät zunächst ohne Probe kalibriert und anschließend die Probe ebenfalls ohne Release-Liner und ohne Platte bzw. Träger eingelegt. Bei anschließender Transmissions-Messung wird die Menge an Licht bestimmt, welche auf der Rückseite der eingelegten Probe austritt. Es findet also ein Vergleich der Lichtmenge vor und nach Einlegen der Probe statt, unabhängig vom Austrittswinkel der Strahlung.

Eine Messung inklusive Trägerplatte, z. B. Glas oder Makrolon, ist auch möglich, allerdings nehmen Transmission und Haze entsprechend dem verwendeten Träger ab.

### II. Montage eines Verbundes auf einer Scheibe

Eine Glasscheibe wird gründlich gereinigt und mit Wasser befeuchtet. Vom Verbundfolienaufbau wird der Releaseliner entfernt und die Kleberschicht ebenfalls befeuchtet. Dann erfolgt die Applikation des Folienverbundes auf der Scheibe. Dazu wird sie auf die Scheibe gelegt und positioniert. Flüssigkeit zwischen der Folie und der Scheibe wird mit einem Kunststoffrakel herausgerackelt. Das entspricht dem Vorgehen bei anderen Fensterfolien, beispielsweise Sichtschutzfolien.

Je nach Dicke des Folienaufbaus müssen die Folien nach der Montage 4 bis 8 Wochen trocken.

### III. Verbundfolie

### Beispiel 1: Dreischichtfolie

Eine TPU-Folie mit einer Stärke von 140 µm "49510-60DV" von SWM INTL (Greenfield, MA, USA), eine PET-Folie mit einer Stärke von 250 µm (Mitsubishi Polyester Film GmbH, Hostaphan RN) und eine PET-Folie mit einer Stärke von 125 µm (Toray Industries, Lumirror 40.01) inklusive dem Hardcoat UV-GL 1366 von Bostik GmbH (Borgholzhausen, Deutschland) wurde ausgerollt und fixiert. Auf die TPU-Folie wurde zunächst ein in Lösung gebrachter Primer, der unter dem "Pearlstick 5701 F51" von Lubrizol Advanced Materials Inc. Europe B.V.B.A (Oevel, Belgium) erhältlich ist, in einer Stärke von ca. 2 µm aufgerakelt. Auf alle Folien wurde dann ein Klebstoff (Durotak, Henkel AG & Co. KGaA) mittels Drahtrakel aufgetragen und mit Heißluft für 1,5 Minuten bei 70 °C getrocknet.

Die Trockenschichtdicke des Klebers betrug bei allen drei Folien etwa 15 µm. Der Klebstoff wurde mit einem siliconisierten Releaseliner abgedeckt und gelagert.

Die Folien wurden dann unter Entfernung des Releaseliners aufeinander geklebt. Grundsätzlich ist der Releaseliner nicht notwendig, wenn die Folien parallel beschichtet werden.
Transmission: 88 %
Haze: 1,9 %

Nach der Montage wurden die Folien 4 Wochen getrocknet. Anschließend wurde ein Kugelfalltest durchgeführt. Die Glasscheibe zersplittert dabei in viele feine Glassplitter, die jedoch an der Folie bleiben. Damit bleibt eine hohe Festigkeit des Gesamtsystems erhalten. Die Folie besteht mit vier gehaltenen Kugeln aus 6 m Fallhöhe den P3A-Test. Bei der fünften Kugel werden Scheibe und Laminat durchschlagen.

### Beispiel 2

Eine Folie wie in Beispiel 1 wurde auf eine Scheibe geklebt und vier Wochen getrocknet. Anschließend wurde diese mit einer zweiten Verbundfolie versehen.

Die zweite Verbundfolie besaß den Aufbau PET 250 µm (Mitsubishi Polyester Film GmbH, Hostaphan RN) und PET plus Hardcoat 180 µm (Toray Industries, Lumirror 40.01). Die beiden Einzelfolien wurden wie im Beispiel 1 mit Klebstoff versehen und direkt aufeinander geklebt. Auf die PET 250 µm Folie wurde dann auf die Klebstoffschicht ein Releaseliner kaschiert.

Nach der Montage wurden die Folien weitere 4 Wochen getrocknet. Anschließend wurde ein Kugelfalltest durchgeführt. Die Glasscheibe zersplittert dabei in viele feine Glassplitter, die jedoch an der Folie bleiben. Damit bleibt eine hohe Festigkeit des Gesamtsystems erhalten. Die Folie besteht mit vier gehaltenen Kugeln aus 9 m Fallhöhe einen Test für P4A.

### Beispiel 3 (Vergleichsbeispiel)

Die Herstellung erfolgt wie in Beispiel 1, allerdings werden folgende Folien verwendet: PET 125 µm (Toray Industries, Lumirror 40.01) sowie zwei Schichten PET 250 µm (Mitsubishi Polyester Film GmbH, Hostaphan RN).
Transmission: 91 %
Haze: 1,6 %

Im Kugelfallversuch verschlechtert sich die Eigenschaft im Vergleich zu Beispiel 1 massiv. Bereits nach der ersten Kugel lösen sich große Stücke des Glases von dem Träger ab und fallen auf den Boden. Die Folie allein (ohne Glas) ist nicht im Stande, den Test zu bestehen. Manchmal wird die Scheibe deshalb schon bei der zweiten anstelle der vierten Kugel durchschlagen und versagt somit im Test.

### Beispiel 4

Hier handelt es sich wie in Beispiel 2 um die Verwendung zweier Verbundfolien. Allerdings wird im Vergleich zu Beispiel 2 die mittlere Schicht D durch ein weiches TPU mit einer Stärke von 150 µm vom Typ "49510-60DV" von SWM INTL (Greenfield, MA, USA), die mit einem Primer "Pearlstick 5701 F51" beschichtet war, ersetzt.

Um eine Beschädigung der weichen Folie beim Applizieren des ersten Laminates auf die Platte zu verhindern, besteht die erste Verbundfolie jedoch aus lediglich zwei Schichten, von denen die obere Schicht mit dem Hardcoat UV-GL 1366 von Bostik GmbH (Borgholzhausen, Deutschland) ausgerüstet ist.

Das zweite Laminat bestand aus dem weichen TPU mit einer Stärke von 150 µm vom Typ "49510-60DV" von SWM INTL (Greenfield, MA, USA) sowie dem PET 250 µm und dem PET 180 µm aus Beispiel 2.

Im Kugelfalltest übertreffen die Folien die Sicherheitsklasse P3A nach Norm DIN EN 356, in dem deutlich mehr Kugeln gehalten werden als notwendig. Bei 9 m Fallhöhe schneiden diese schlechter ab als die Aufbauten gemäß Beispiel 2, sie erfüllen nicht zuverlässig die Sicherheitsklasse P4A nach Norm DIN EN 356.

### Beispiel 5

Beispiel 5 ist eine Folie, bei der wie in Beispiel 1 der gleiche Schichtaufbau gewählt wird, wobei jedoch auf einen Primer zwischen dem TPU und der ersten Klebstoffschicht verzichtet wird. Außerdem weist die oberste PET Schicht keinen Hardcoat auf.
Transmission: 90 %
Haze: 1,7 %

Im Kugelfalltest verschlechtert sich gegenüber Beispiel 1 das Bruchbild deutlich, da sich Glasstücke von der Folie ablösen, der Klebstoff jedoch am Glas verbleibt. Eine Auswirkung auf die Kugelfalltests ist nicht vorhanden. Die Anforderungen an P3A werden mit 4 gehaltenen Kugeln dennoch erfüllt.

Es zeigt sich weiterhin, dass ein Hardcoat Spuren der Montage durch das Aufrakeln verringert.

## Patentansprüche

1. Platte mit einer Verbundfolie umfassend
- einen Träger A
- eine Schicht eines drucksensitiven Klebstoffs
- eine Schicht B eines weicheren Kunststoffs mit einer Dicke von mindestens 25 µm
- eine Schicht eines drucksensitiven Klebstoffs
- eine Schicht C eines härteren Kunststoffs mit einer Dicke von mindestens 25 µm
- eine Schicht eines drucksensitiven Klebstoffs
- eine Schicht F eines härteren Kunststoffs mit einer Dicke von mindestens 50 µm
wobei die Verbundfolie ohne den Träger transparent ist und eine Gesamtdicke von mindestens 350 µm aufweist, wobei Schichten aus weicherem Kunststoff unabhängig voneinander ausgewählt sind aus thermoplastischem Polyurethan oder Weichmacher-modifiziertem PVC und wobei Schichten aus härterem Kunststoff unabhängig voneinander ausgewählt sind aus Polyethylenterephthalat, Polyethylennapthalat, Acrylnitril-Butadien-Styrol, Poly(methylmethacrylat) oder Polybutylenterephthalat.

2. Platte mit einer Verbundfolie nach Anspruch 1 wobei der Träger A aus Glas, Acrylglas oder Polycarbonat besteht.

3. Platte mit einer Verbundfolie nach Anspruch 2 umfassend weiterhin unterhalb der Schicht des drucksensitiven Klebstoffs, die in Kontakt mit der Schicht F steht
- eine Schicht eines drucksensitiven Klebstoffs
- eine Schicht D eines weicheren oder eines härteren Kunststoffs mit einer Dicke von mindestens 75 µm
- eine Schicht eines drucksensitiven Klebstoffs
- eine Schicht E eines härteren Kunststoffs mit einer Dicke von mindestens 70 µm.

4. Platte mit einer Verbundfolie nach einem der Ansprüche 1 bis 3, wobei die Materialien für die weicheren Schichten thermoplastisches Polyurethan und die Materialien für die die härteren Schichten Polyethylenterephthalat sind.

5. Platte mit einer Verbundfolie nach einem der Ansprüche 1 bis 4, wobei die oberste Folie der Verbundfolie auf der kleberabgewandten Seite einen Hardcoat aufweist..

6. Platte mit einer Verbundfolie nach einem der Ansprüche 1 bis 5, wobei die Schicht B eine Dicke von 75 bis 400 µm, bevorzugt 100 bis 200 µm aufweist.

7. Platte mit einer Verbundfolie nach einem der Ansprüche 1 bis 6, wobei die Platte mit Verbundfolie mindestens die Widerstandsklasse P3A nach DIN EN 356 erfüllt, wenn die Platte ein 4 mm Floatglas ist und Montage der Platte in einem Rahmen mit einem Anpressdruck von 1600 ± 250 kN/m² erfolgt.

8. Verbundfolie umfassend
- eine Abdeckschicht X
- eine Schicht eines drucksensitiven Klebstoffs
- eine Schicht B eines weicheren Kunststoffs mit einer Dicke von mindestens 25 µm
- eine Schicht eines drucksensitiven Klebstoffs
- eine Schicht C eines härteren Kunststoffs mit einer Dicke von mindestens 25 µm,
wobei die Verbundfolie ohne die Abdeckschicht X transparent ist und eine Gesamtdicke von mindestens 200 µm aufweist, wobei die Schichten aus weicherem Kunststoff unabhängig voneinander ausgewählt sind aus thermoplastischem Polyurethan oder Weichmacher-modifiziertem PVC und wobei die Schichten aus härterem Kunststoff unabhängig voneinander ausgewählt sind aus Polyethylenterephthalat, Polyethylennapthalat, Polycarbonat, Acrylnitril-Butadien-Styrol, Poly(methylmethacrylat) oder Polybutylenterephthalat.

9. Verbundfolie nach Anspruch 8 umfassend weiterhin
- eine Schicht eines drucksensitiven Klebstoffs
- eine Schicht F eines härteren Kunststoffs mit einer Dicke von mit einer Dicke von mindestens 50 µm,
wobei die Verbundfolie ohne die Abdeckschicht X transparent ist und eine Gesamtdicke von mindestens 350 µm aufweist.

10. Verfahren zur Herstellung einer Platte mit einer Verbundfolie nach einem der Ansprüche 1 bis 7 umfassend den Schritt
- Montage einer oder mehrerer Folien oder Verbundfolien auf der Platte.

11. Verfahren nach Anspruch 10, wobei zunächst eine erste Verbundfolie umfassend die Schichten B, C montiert wird und anschließend eine zweite Verbundfolie umfassend die Schichten D, E und F montiert wird oder zunächst eine erste Verbundfolie umfassend die Schichten B, C, D montiert wird und anschließend eine zweite Verbundfolie umfassend die Schichten E und F montiert wird.

12. Verfahren nach einem der Ansprüche 10 oder 11, wobei die Platte ein Bauteil eines Fensters ist.

13. Verfahren nach Anspruch 12, wobei die Verbundfolie auf einer Seite der Platte montiert wird, die der Sonneneinstrahlung abgewandt ist und/oder die Verbundfolie auf einer Seite der Platte montiert wird, die der Sonneneinstrahlung zugewandt ist.

14. Verwendung einer Verbundfolie nach einem der Ansprüche 8 oder 9 zur Verstärkung einer Platte.

15. Verwendung von Polyurethanfolie als Basisfolie einer Verbundfolie zur Verstärkung einer Platte, wobei die Basisfolie in Kontakt mit der Platte steht.
